# EUROPEAN PATENT APPLICATION

(11) **EP 3 167 710 A1**
(43) Date of publication of application: **17.05.2017**
(21) Application number: 16197950.5
(22) Date of filing: 09.11.2016
(51) Int. Cl.: A01K 27/00

(54) **PET LEASH**

(30) Priority: 11.11.2015 US 201514937911
(71) Applicant: Fang, Daniel John, Fo Tan, New Territories (HK)
(72) Inventor: Fang, Daniel John, Fo Tan, New Territories (HK)
(74) Representative: Altenburg, Bernardus Stephanus Franciscus

(57) **Abstract**

A pet leash (1) applied to a pet (300) is disclosed. The pet leash (1) includes a leash (10), a fastening part (60) and a connecting part (30). The leash (10) includes a front leash end (11) and a rear leash end (12). The fastening part (60) is mounted between the front leash end (11) and the rear leash end (12), wherein the fastening part (60) is closer to the front leash end (11) than to the rear leash end (12). The connecting part (30) is connected to the front leash end (11); the connecting part (30) is used for fastening to the fastening part (60) to form a fixed collar ring (70) for fastening the pet (300).

## Description

### BACKGROUND OF THE INVENTION

### 1. Field of the Invention

The present invention relates to a pet leash; more particularly, the present invention relates to a pet leash that combines different functions, such as forming a collar with a stable size, attaching to an external collar, forming a slidably collar which has a minimum size, and forming another kind of slidably collar which controls the pet well.

### 2. Description of the Related Art

In modern society, many people own pets, and one popular type of pet is the dog. Because a dog needs to go outside for exercise to ensure its health, the owner of the dog must often walk the dog. To prevent the dog from becoming lost or causing any danger (such as running into a road and causing a car accident), the owner usually uses a pet leash to control the dog, wherein one end of the pet leash is fastened to a collar around the neck of the dog, and another end is held by the owner. This arrangement keeps the dog in close proximity to the owner and prevents the dog from escaping the control of the owner or becoming lost.

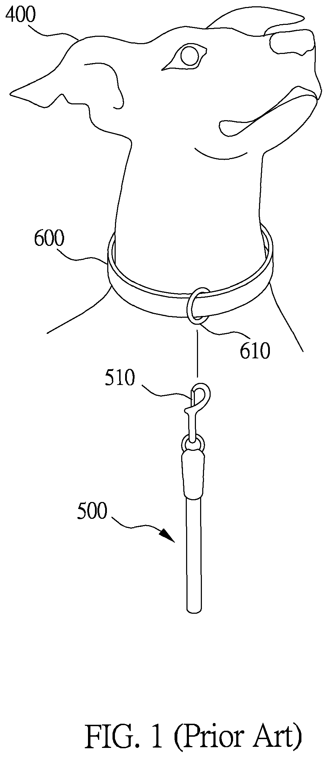

Since every dog has its own specific character and body type, the manufacturer has produced different kind of pet leashes to meet the requirement of the dog and the owner. For example, as shown in FIG. 1, the traditional set-up type pet leash 500 of the prior art has a hook trigger 510 for attaching to an external collar 600, and the external collar 600 has a ring 610 for fastening to the hook trigger 510; if the owner wants to walk the dog 400, the owner can easily attach the hook trigger 510 to the ring 610, to combine the traditional set-up type pet leash 500 and the external collar 600.

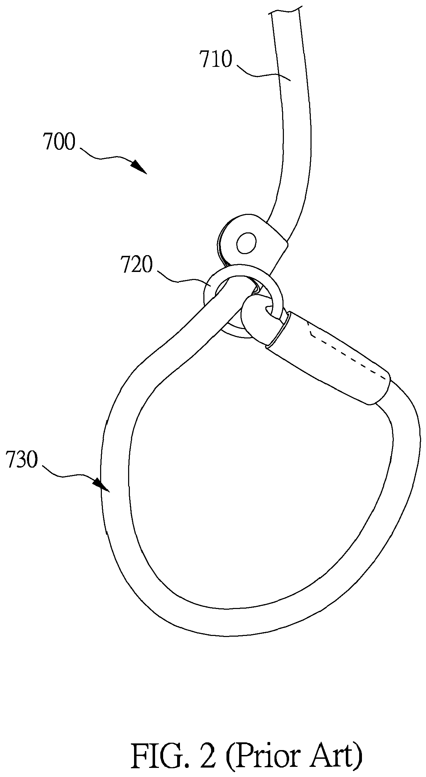

Furthermore, as shown in FIG. 2, the british slip lead type pet leash 700 of the prior art has a leash 710 and a slip knot 720 movably connected to the leash 710. The slip knot 720 and the leash 710 form a collar 730, the size of the collar 730 can be changed based on the movement of the slip knot 720 along the leash 710. The collar 730 is used for fastening to the neck of dog, and the skip knot 720 will tighten and the size of the collar 730 will become smaller if the dog acts too hard, therefore, via this british slip lead type pet leash 700, the owner can gain more control to the dog. A similar structure is also disclosed in FIG. 2 of U.S Pat. No. 7,066,113 B2.

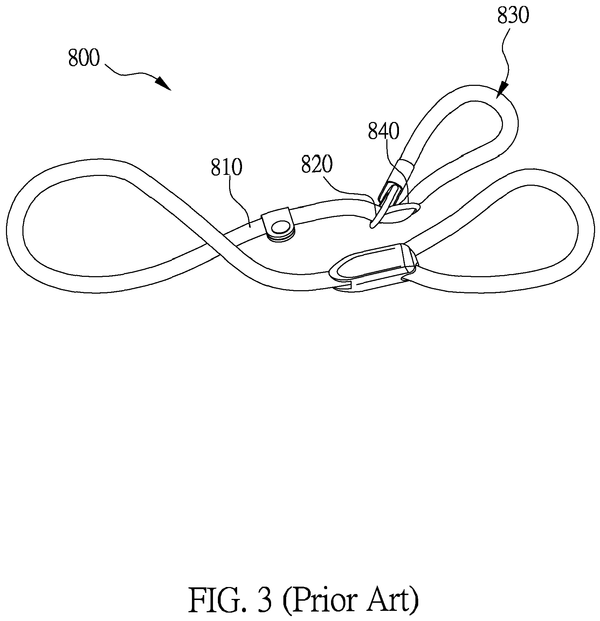

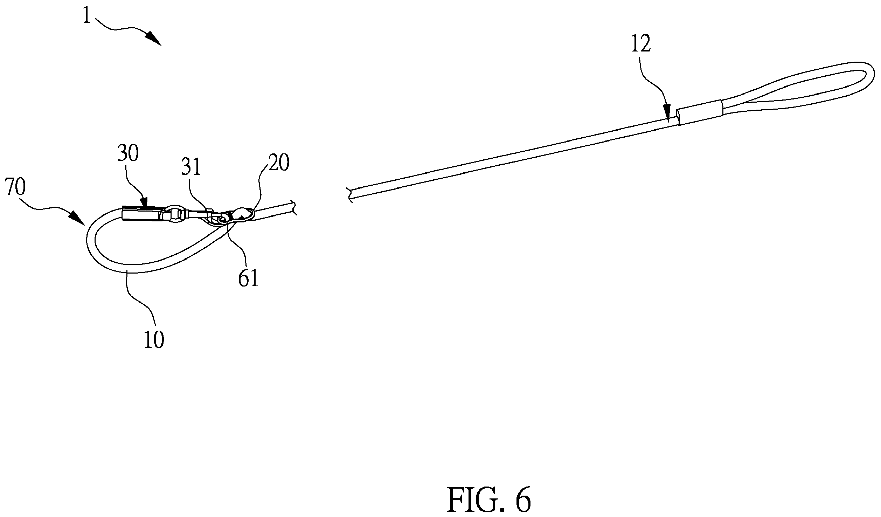

Furthermore, as shown in FIG. 3, the semi slip lead type pet leash 800 of the prior art has a leash 810, a slip knot 820 movably connected to the leash 810 and a size adjusting buckle 840 attached to the leash 810. The slip knot 820 and the leash 810 form a collar 830, the size of the collar 830 can be changed based on the movement of the slip knot 820 along the leash 810, and the size adjusting buckle 840 limits the movement of the slip knot 820, such that the collar 830 can have a minimum size. A similar structure is also disclosed in FIG. 6 of U.S. Pat. No. 4,019,463.

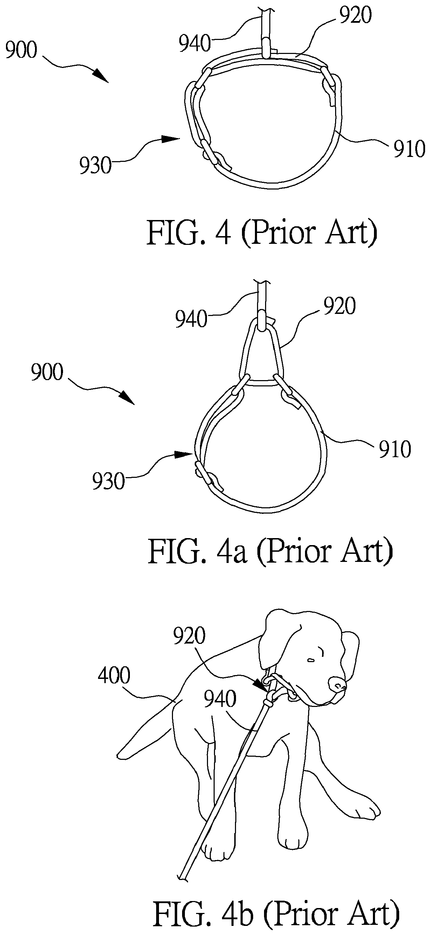

Furthermore, as shown in FIG. 4 to FIG. 4b, the Martingale type pet leash 900 has a collar belt 910, a size adjusting belt 920 and a leash 940. The collar belt 910 and the size adjusting belt 920 form a collar 930. The leash 940 is connected to the size adjusting belt 920. The size adjusting belt 920 is fastened to the two ends of the collar belt 910; when the dog 400 pulls, the leash 940 will pull the size adjusting belt 920 and the size adjusting belt 920 will be tighten, such that the size of the collar 930 will become smaller, and the owner can gain more control to the dog 400.

Since different kinds of leash have their own unique functions, the owner has to prepare each kind of leashes to use those unique functions to meet the different requirement in different circumstances. For example, if the owner only has the traditional set-up type pet leash 500 as shown in FIG. 1, then this owner cannot use the function of immediately changing the collar size, the owner must buy the british slip lead type pet leash 700, the semi slip lead type pet leash 800 or the Martingale type pet leash 900 to use the function of immediately changing the collar size; another example, if another owner only has the british slip lead type pet leash 700, then this cannot use the function of attaching to an external collar 600, the owner must buy the traditional set-up type pet leash 500 to use the function of attaching to an external collar 600. However, preparing each kind of leashes with those different and unique functions to meet the different requirement will cost lots of money and those leashes will occupy lots of space. Therefore, there is a need to provide a new pet leash that integrately combines those different and unique functions.

### SUMMARY OF THE INVENTION

It is an object of the present invention to provide a pet leash that combines different functions, such as forming a collar with a stable size, attaching to an external collar, forming a slidably collar which has a minimum size, and forming another kind of slidably collar which controls the pet well.

To achieve the abovementioned object, the pet leash of the present invention is applied to a pet. The pet leash includes a leash, a fastening part and a connecting part. The leash includes a front leash end and a rear leash end. The fastening part is mounted between the front leash end and the rear leash end, wherein the fastening part is closer to the front leash end than to the rear leash end. The connecting part is connected to the front leash end, and the connecting part is used for fastening to the fastening part to form a fixed collar ring for fastening the pet.

According to one embodiment of the present invention, the connecting part is also used for movably connecting to the leash to form an unfixed collar ring for fastening the pet.

According to one embodiment of the present invention, the pet leash further includes a size adjusting part which is mounted between the front leash end and the rear leash end.

According to one embodiment of the present invention, the connecting part has a trigger hook and the fastening part has a loop, and the trigger hook is used for fastening to the loop.

According to one embodiment of the present invention, the fastening part is connected to the size adjusting part.

According to one embodiment of the present invention, the size adjusting part divides the leash into a first part and a second part.

According to one embodiment of the present invention, the first part is between the size adjusting part and the connecting part.

According to one embodiment of the present invention, the second part is between the size adjusting part and the rear leash end.

According to one embodiment of the present invention, the connecting part is used for fastening to the fastening part or movably connecting to the first part or the second part of the leash.

According to one embodiment of the present invention, when the connecting part is movably connected to the first part, the size adjusting part limits a maximum size of the unfixed collar ring.

According to one embodiment of the present invention, when the connecting part is movably connected to the second part, the size adjusting part limits a minimum size of the unfixed collar ring.

### BRIEF DESCRIPTION OF THE DRAWINGS

FIG. 1 illustrates a schematic drawing of the traditional set-up type pet leash of the prior art.
FIG. 2 illustrates a schematic drawing of the british slip lead type pet leash of the prior art.
FIG. 3 illustrates a schematic drawing of the semi slip lead type pet leash of the prior art.
FIG. 4 illustrates a schematic drawing of the Martingale type pet leash of the prior art.
FIG. 4a illustrates a schematic drawing of the Martingale type pet leash which is tightened of the prior art.
FIG. 4b illustrates a schematic drawing of the Martingale type pet leash and a dog of the prior art.
FIG. 5 illustrates a schematic drawing of one embodiment of the pet leash of the present invention.
FIG. 6 illustrates a schematic drawing of one embodiment of the pet leash of the present invention when the connecting part is fastened to the fastening part.
FIG. 7 illustrates a schematic drawing of one embodiment of the pet leash of the present invention when applied to a pet.
FIG. 8 illustrates a schematic drawing of one embodiment of the pet leash of the present invention when the connecting part is movably connected to the first part.
FIG. 9 illustrates a schematic drawing of one embodiment of the pet leash of the present invention when the connecting part is movably connected to the second part.
FIG. 10 illustrates a schematic drawing of one embodiment of the pet leash of the present invention when the trigger hook fastens to an external collar.

### DETAILED DESCRIPTION OF THE PREFERRED EMBODIMENT

These and other objects and advantages of the present invention will become apparent from the following description of the accompanying drawings, which disclose several embodiments of the present invention. It is to be understood that the drawings are to be used for purposes of illustration only, and not as a definition of the invention.

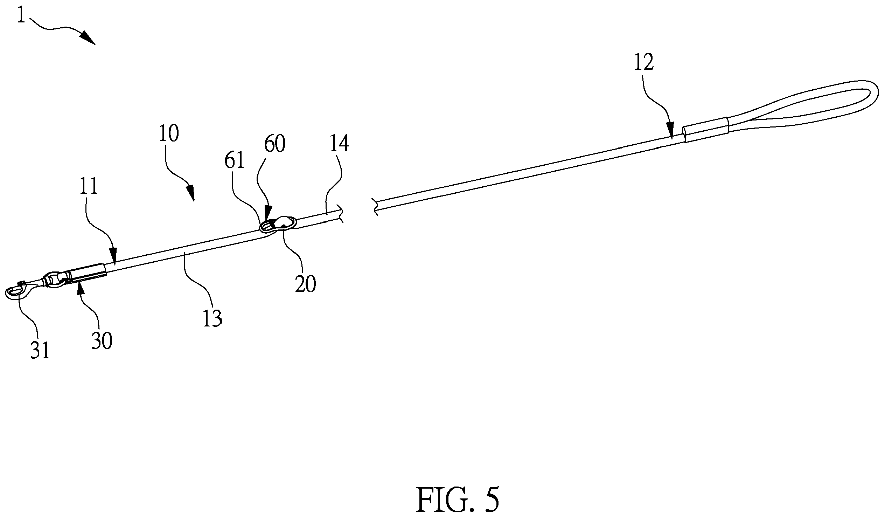

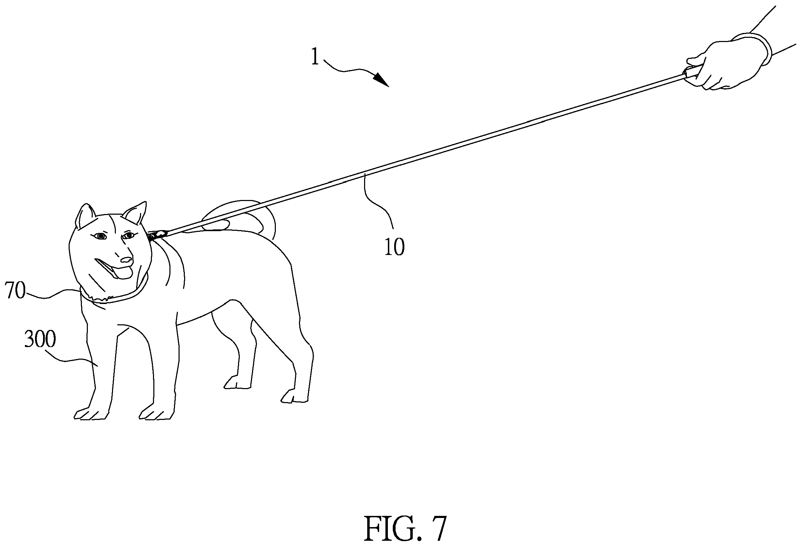

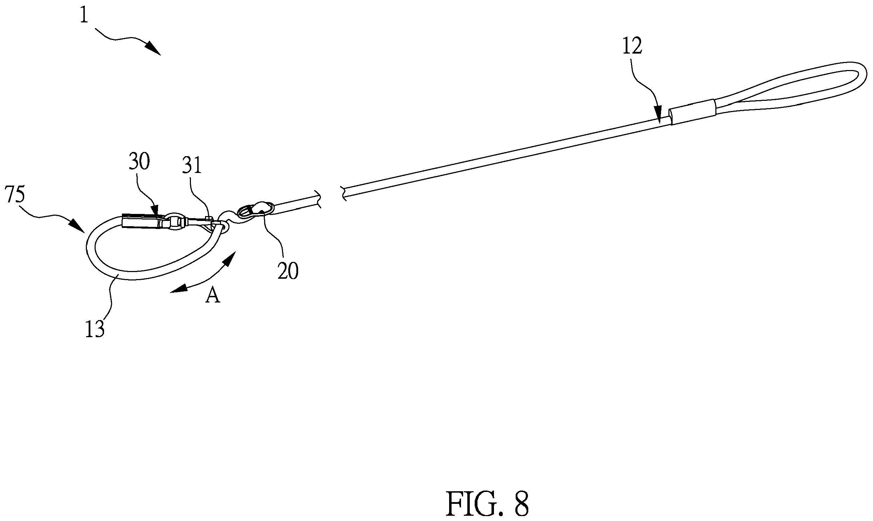

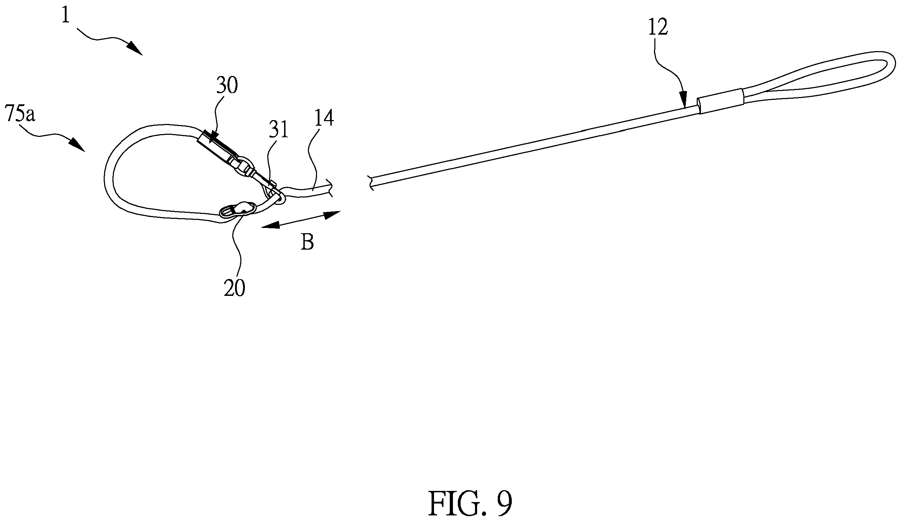

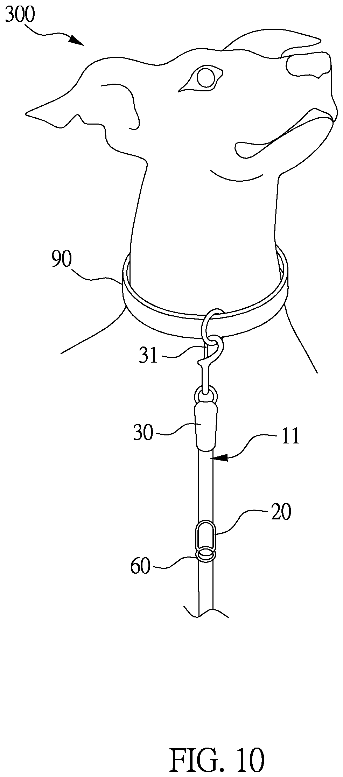

Please refer to FIG. 5 to FIG. 10, which illustrate one embodiment of the pet leash of the present invention. FIG. 5 illustrates a schematic drawing of one embodiment of the pet leash of the present invention. FIG. 6 illustrates a schematic drawing of one embodiment of the pet leash of the present invention when the connecting part is fastened to the fastening part. FIG. 7 illustrates a schematic drawing of one embodiment of the pet leash of the present invention when applied to a pet. FIG. 8 illustrates a schematic drawing of one embodiment of the pet leash of the present invention when the connecting part is movably connected to the first part. FIG. 9 illustrates a schematic drawing of one embodiment of the pet leash of the present invention when the connecting part is movably connected to the second part. FIG. 10 illustrates a schematic drawing of one embodiment of the pet leash of the present invention when the trigger hook fastens to an external collar

As shown in FIG. 5 and FIG. 7, in one embodiment of the present invention, the pet leash 1 is applied to a pet 300, and the pet 300 can be a dog, a cat, a rabbit, or another kind of animal. The pet leash 1 includes a leash 10, a size adjusting part 20, a connecting part 30 and a fastening part 60.

As shown in FIG. 5 to FIG. 7, in one embodiment of the present invention, the leash 10 includes a front leash end 11 and a rear leash end 12.

The connecting part 30 connects to the front leash end 11, whereby the connecting part 30 is used for fastening to the fastening part 60 to form a fixed collar ring 70 for fastening the pet 300, and the connecting part 30 is also used to movably connecting to the leash 10 to form an unfixed collar ring 75, 75a (shown in FIG. 8 and FIG. 9) for fastening the pet 300. As shown in FIG. 6, FIG. 8 and FIG. 10, the connecting part 30 includes a trigger hook 31, and the trigger hook 31 is used for fastening to the fastening part 60, movably connecting to the leash 10 or an external collar 90. The fastening part trigger hook 31 has a loop and a gate. If the user wants to use the trigger hook 31 to fasten the fastening part 60, the user should open the gate, put the fastening part 60 into the loop of the trigger hook 31, and close the gate, such that the loop and the gate of the trigger hook 31 form a closed loop structure, and the fastening part 60 will be fastened in the closed loop structure. Similarly, if the user wants to use the trigger hook 31 for movably connecting the leash 10, the user should open the gate, put the leash 10 into the loop of the trigger hook 31, and close the gate, such that the loop and the gate of the trigger hook 31 form a closed loop structure and the leash 10 is located in the closed loop structure to complete the movable connection of the trigger hook 31 and the leash 10. However, because the structure of the trigger hook 31 is already disclosed in the prior art, there is no need for further description. Furthermore, the structure of the trigger hook 31 is not limited to the abovementioned description; it can be changed to another structure which has a fastening function.

The size adjusting part 20 is mounted between the front leash end 11 and the rear leash end 12, and the size adjusting part 20 can move along the leash 10. The size adjusting part 20 divides the leash 10 into a first part 13 and a second part 14, wherein the first part 13 is between the size adjusting part 20 and the connecting part 30, and the second part 14 is between the size adjusting part 20 and the rear leash end 12. Via the movement of the size adjusting part 20, the lengths of the first part 13 and the second part 14 can be changed.

The fastening part 60 is connected to the size adjusting part 20, and the fastening part 60 is mounted between the front leash end 11 and the rear leash end 12, such that the fastening part 60 can move with the size adjusting part 20. However, the fastening part 60 is not limited to connecting to the size adjusting part 20; the size adjusting part 20 and the fastening part 60 can also be separated. The fastening part 60 is closer to the front leash end 11 than to the rear leash end 12. As shown in FIG. 5, the fastening part 60 is connected to one end of the size adjusting part 20 and toward to the front leash end 11, but this invention is not limited to this design, the fastening part 60 can be design to be connected to the other end of the size adjusting part 20 and toward to the rear leash end 12.The fastening part 60 has a loop 61 which is used for fastening to the trigger hook 31. When the trigger hook 31 is fastened to the loop 61 of the fastening part 60, the leash 10, the trigger hook 31 and the fastening part 60 form a pet collar ring 70. The pet collar ring 70 is used for fastening to the pet 300. Via the movement of the size adjusting part 20 on the leash 10, the length between the size adjusting part 20, the fastening part 60 and the trigger hook 31 can be changed, whereby the size of the pet collar ring 70 can be changed to accommodate the pet 300 regardless of size. However, the pet collar ring forming method is not limited to the abovementioned application; as shown in FIG. 8, the trigger hook 31 can also be movably connected to the first part 13 of the leash 10 to form an unfixed collar ring 75, the trigger hook 31 can slide on the first part 13 along the direction A for adjusting the size of the unfixed collar ring 75, and the size adjusting part 20 can limit the sliding of the trigger hook 31 for limiting a maximum size of the unfixed collar ring 75 so that the unfixed collar ring 75 does not become so large that the pet 300 can get out of the unfixed collar ring 75; beside, the sliding trigger hook 31 can tighten the unfixed collar ring 75, allowing the user to control the dog well. In addition, as shown in FIG. 9, the trigger hook 31 can also be movably connected to the second part 14 to an unfixed collar ring 75a, the trigger hook 31 can slide on the second part 14 of the leash 10 along the direction B for adjusting the size of the unfixed collar ring 75a, and the size adjusting part 20 can limit the sliding of the trigger hook 31 for limiting a minimum size of the unfixed collar ring 75a so that the unfixed collar ring 75a does not become so small that it constricts the neck of the dog. Furthermore, as shown in FIG. 10, is the user is not satisfied with the pet collar ring 70 or the unfixed collar ring 75, 75a, the user can still use an external collar 90 to fasten the dog 300, and also use the trigger hook 31 to fasten to the external collar 90.

When the user wants to apply the pet leash 1 of the present invention to the pet 300 to walk with the pet 300, as shown in FIG. 5 to FIG. 7, the user can fasten the trigger hook 31 of the connecting part 30 to the fastening part 60 such that the trigger hook 31 of the connecting part 30, the leash and the fastening part 60 form the pet collar ring 70; then the user can fasten the pet collar ring 70 to the neck of the pet 300 and adjust the position of the size adjusting part 20 on the leash 10 to adjust the position of the fastening part 60 according to the size of the neck or the back of the pet 300, such that the pet collar ring 70 can be fastened to the neck or the back of the pet 300 with a suitable size. Furthermore, as shown in FIG. 8 and FIG. 9, the user can also cause the trigger hook 31 of the connecting part 30 to be movably connected to the first part 13 or to the second part 14 to form an unfixed collar ring 75 with a maximum size or an unfixed collar ring 75a with a minimum size, whereby, via the movable connection of the trigger hook 31 and the first part 13 or the second part 14, the user can cause the trigger hook 31 to slide on the first part 13 or on the second part 14 such that the user can adjust the size of the unfixed collar ring 75, 75a quickly and easily to meet the requirements and the actions of the pet. Furthermore, as shown in FIG. 10, is the user is not satisfied with the pet collar ring 70 or the unfixed collar ring 75, 75a, the user can still use an external collar 90 to fasten the dog 300, and also use the trigger hook 31 to fasten to the external collar 90.

Via the design of the pet leash 1 of the present invention, the pet leash 1 combines different functions, such as forming a pet collar ring 70 with a stable size, attaching to an external collar 90, forming an unfixed collar ring 75a which has a minimum size, and forming an unfixed collar ring 75 which controls the pet well.

It is noted that the above-mentioned embodiments are only for illustration. It is intended that the present invention cover modifications and variations of this invention provided they fall within the scope of the following claims and their equivalents. Therefore, it will be apparent to those skilled in the art that various modifications and variations can be made to the structure of the present invention without departing from the scope or spirit of the invention.

## Claims

1. A pet leash (1), applied to a pet (300), the pet leash (1) comprising:
a leash (10), comprising a front leash end (11) and a rear leash end (12) ;
a fastening part (60) mounted between the front leash end (11) and the rear leash end (12), wherein the fastening part (60) is closer to the front leash end (11) than to the rear leash end (12); and
a connecting part (30), connected to the front leash end (11),
wherein the connecting part (30) is used for fastening to the fastening part (60) to form a fixed collar ring (70) for fastening the pet (300).

2. The pet leash as claimed in Claim 1, wherein the connecting part (30) is also used for movably connecting to the leash (10) to form an unfixed collar ring (75, 75a) for fastening the pet (300).

3. The pet leash as claimed in Claim 1 or 2, further comprising a size adjusting part (20) mounted between the front leash end (11) and the rear leash end (12).

4. The pet leash as claimed in Claim 1, 2, or 3, wherein the connecting part (30) has a trigger hook (31) and the fastening part (60) has a loop (61), wherein the trigger hook (31) is used for fastening to the loop (61).

5. The pet leash as claimed in Claim 3 or 4, wherein the fastening part (60) is connected to the size adjusting part (20).

6. The pet leash as claimed in any of the Claims 3, 4 and 5, wherein the fastening part (60) is connected to the size adjusting part (20).

7. The pet leash as claimed in any of the Claims 1, 2, 3, 4, 5 and 6, wherein the connecting part (30) further comprises a trigger hook (31) and the fastening part (60) further comprises a loop (61), wherein the trigger hook (31) is used for fastening to the loop (61).

8. The pet leash as claimed in any of the claims Claim 3, 4, 5, 6 and 7, wherein the size adjusting part (20) divides the leash (10) into a first part (13) and a second part (14).

9. The pet leash as claimed in Claim 8, wherein the first part (13) is between the size adjusting part (20) and the connecting part (30).

10. The pet leash as claimed in Claim 8 or 9, wherein the second part (14) is between the size adjusting part (20) and the rear leash end (12) .

11. The pet leash as claimed in Claim any of the claims 8, 9 and 10, wherein the connecting part (30) is used for fastening to the fastening part (60) or movably connecting to the first part (13) or the second part (14) of the leash (10).

12. The pet leash as claimed in Claim 11, wherein when the connecting part (30) is movably connected to the first part (13), the size adjusting part (20) limits a maximum size of the unfixed collar ring (75, 75a).

13. The pet leash as claimed in Claim 11 or 12, wherein when the connecting part (30) is movably connected to the second part (14), the size adjusting part (20) limits a minimum size of the unfixed collar ring (75, 75a).

14. The pet leash as claimed in any of the Claims 11, 12 and 13, wherein the connecting part (30) further comprises a trigger hook (31) and the fastening part (60) further comprises a loop (61), wherein the trigger hook (31) is used for fastening to the loop (61).

15. The pet leash as claimed in any of the Claims 11, 12, 13 and 14, wherein the fastening part (60) is connected to the size adjusting part (20).
